**Europäisches Patentamt**

**European Patent Office**

**Office européen des brevets**

(19)

(11) Numéro de publication: **0 119 117**
**A1**

(12)

# DEMANDE DE BREVET EUROPEEN

(21) Numéro de dépôt: **84400272.5**

(22) Date de dépôt: **09.02.84**

(51) Int. Cl.³: **G 01 L 9/00**

(30) Priorité: **14.02.83 FR 8302301**

(43) Date de publication de la demande:
**19.09.84 Bulletin 84/38**

(84) Etats contractants désignés:
**AT BE CH DE GB IT LI LU NL SE**

(71) Demandeur: **MECILEC S.A.**
**91 bis, rue du Cherche-Midi**
**F-75006 Paris(FR)**

(72) Inventeur: **Guillemot, Philippe**
**78 rue de l'Ouest**
**75014 Paris(FR)**

(74) Mandataire: **Hirsch, Marc-Roger**
**34 rue de Bassano**
**F-75008 Paris(FR)**

(54) **Dispositifs électro-optiques de détection et de mesure de déformations.**

(57) Dispositif electro-optique de détection et de mesure de déformations de parois déformables comprenant un dispositif d'émission (8) d'un faisceau lumineux venant se réfléchir sur un point de la paroi (3).

Il est caractérisé par le fait que le faisceau réfléchi est focalisé sur un récepteur (15) muni d'au moins un détecteur en positions correspondant à des déformations positives, négatives ou nulles de ladite paroi (3).

Application aux capteurs numériques de pression en amenant la pression de référence à égalité avec la pression à mesurer toutes les fois que la déformation de la paroi correspond à un incrément ou un décrément de pression prédéterminé.

0119117

DISPOSITIFS ELECTRO-OPTIQUES DE DETECTION
ET DE MESURE DE DEFORMATIONS

La présente invention a pour objet des dispositifs électro-optiques de détection et/ou de mesure de déformations de parois déformables utilisables notamment dans les capteurs de pression.

De très nombreux capteurs de pression sont basés sur la déformation d'une paroi séparant deux volumes à pressions différentes, l'importance et le sens de la déformation étant liés à la variation relative des pressions. De tels dispositifs peuvent convenir, notamment, pour les capteurs de pression tels ceux faisant l'objet du brevet français 2.430.004 (du 30 juin 1978), au nom de la demanderesse et de ses deux additions (2.431.690 du 18 juillet 1978 et 2.498.754 du 27 janvier 1981).

Dans ces dispositifs, deux chambres sont séparées par une paroi déformable: dans l'une règne la pression à mesurer, dans l'autre une pression de référence. Dès que la différence atteint un incrément ou un décrément prédéterminés, le circuit de détection enregistre l'instant et la nature de la variation puis on égalise les pressions dans les deux chambres, ce qui permet de repartir vers la mesure d'un nouvel écart à partir de la nouvelle pression de référence. De proche en proche, on peut ainsi compter les écarts prédéterminés de pression et leur signe ou constater l'absence de variation. Le plus grand écart de pression exercé sur la paroi déformable correspond donc à l'incrément/décrément prédéterminé, ce qui permet notamment, tout en travaillant à des pressions éventuellement élevées (en valeur absolue), de ne faire supporter à ladite paroi déformable que des contraintes limitées du fait de la limitation des écarts de pressions (en valeur relative). La détection de cette déformation de la paroi ou absence de déformation peut se faire par un dispositif optoélectronique, piézoélectrique ou électromécanique traduisant directement le résultat en signaux logiques.

On compte donc des échelons de pression (positifs ou négatifs prédéterminés) ou on constate l'absence de variation. On peut donc intégrer, dans l'enceinte sous pression, les deux chambres, la paroi déformable, le dispositif de détection et le système d'amenée en pression de la chambre de référence, le tout constitue donc un capteur de pression que l'on peut réaliser en dimensions réduites.

Selon le brevet français cité ci-dessus et ses additions, on peut réaliser entre autres exemples, la chambre de référence fermée à une extrémité par la paroi déformable et à l'autre par le dispositif d'égalisation de pression, les volumes situés de l'autre côté de ladite paroi et dudit dispositif communiquant entre eux et constituant la chambre de pression à mesurer.

La présente demande a pour objet un dispositif opto-électronique de détection et/ou de mesure de la déformation de la paroi.

Un point précis de la paroi déformable est éclairé par un faisceau concentré, par exemple d'infrarouges, émis par une photodiode à travers une optique de réglage du faisceau en concentration et en position. La lumière émise est, de préférence, sensiblement monochromatique (longueur d'onde de l'ordre par exemple de 850 à 900 nm). Le faisceau réfléchi par la paroi déformable et éventuellement après une ou plusieurs autres réflexions est focalisé sur un récepteur muni d'une ou plusieurs photodiodes réceptrices en positions correspondant pour chacune à une déformation (positive, négative ou nulle) de ladite paroi. Selon le nombre et la position des éléments de détection, on peut détecter soir un écart prédéterminé, soit deux écarts prédéterminés (incrément, décrément), soit deux écarts et une absence de variation (incrément, rien, décrément) ou encore mesurer une série de variations (un détecteur par valeur).

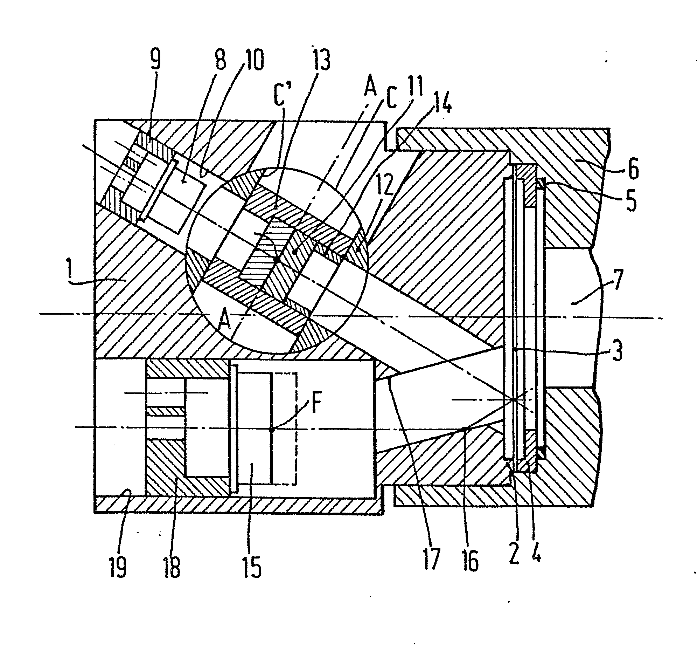

Pour mieux faire comprendre les caractéristiques techniques et les avantages de la présente invention, on va en décrire un exemple de réalisation, étant bien entendu que celui-ci n'est pas limitatif quant à son mode de mise en oeuvre et aux applications qu'on peut en faire. On se reportera à la figure unique qui représente en coupe axiale schématique un dispositif conforme à la présente invention.

Le capteur de pression comprend un corps 1 de forme générale cylindrique que l'on place dans un volume où règne l'une des pressions (à mesurer ou de référence). A l'une des extrémités du corps 1 sur une saillie circulaire 2 est fixée la paroi déformable 3 constituée en tout matériau étanche et à bonnes propriétés mécaniques. Cette paroi joue le rôle classique des membranes dans tous les dispositifs à pression différentielle. Elle est maintenue par un anneau et un joint 5 calés dans un second corps 6 dont le trou axial est en communication ou avec le volume où règne l'autre pression (de préférence ou à mesurer). Les corps 6 et 1 sont fixés l'un à l'autre par tout moyen adéquat non représenté sur la figure, par exemple par vissage.

Dans le corps 1 sont définis plusieurs alésages pour la mise en place de l'émetteur de lumière de l'optique de réglage, et des détecteurs récepteurs, pour le passage du faisceau et sa réflexion sur la paroi déformable et pour le passage du fluide permettant à la face de la paroi 3 située du côté du système opto-électronique d'être à la pression voulue. L'émetteur 8 de rayonnement infrarouge peut être une photodiode montée sur le support 9 inséré dans l'alésage 10. Cette photodiode 8 est alimentée par tout moyen classique non représenté sur la figure. Le faisceau qu'elle émet passe par l'optique 11 , ici représentée par deux lentilles, montée sur un ensemble support 12 à deux axes de rotation orthogonaux ce qui permet de décaler le faisceau qui est issu de l'optique vers le haut ou le bas, l'avant ou l'arrière du plan de figure. La focalisation de l'optique est réglée de sorte que la réflexion se fasse en un point adéquat de la paroi 3 pour venir se concentrer à la surface de l'ensemble récepteur 15. Pour la réflexion sur la paroi 3 on choisira, de préférence, la zone d'inflexion lors des déformations, c'est-à-dire la zone qui reste prise en coupe dans le plan axial (plan de la figure) la plus proche de la tangente, c'est-à-dire la moins courbée par les déformations, tout en s'écartant de sa position de repos de façon suffisamment significative pour que la détection et/ou la mesure le soient également. Le dispositif 12 présente deux articulations l'une autour de l'axe perpendiculaire au plan de figure au point O, ce qui se traduit par la rotation de l'ensemble 12 situé dans le cylindre C perpendiculaire au plan de figure et l'autre qui se traduit par la rotation de l'élément 13 autour de l'axe AA' dans le cylindre C' d'axe AA'. Ces montages qui peuvent être de tout type ne sont pas représentés sur la figure.

L'optique 11 est calée dans l'élément 13 par la bague 14 qui peut, par exemple y être vissée, le réglage de l'optique 11 elle-même peut également se faire par tout moyen classique non représenté. Le faisceau issu de l'optique 11 peut, après réflexion sur la paroi 3 (sensiblement selon l'axe tracé en traits mixtes qui ne tient pas compte sur la figure de l'éventuelle correction par l'ensemble 11, 12, 13) venir se réfléchir sur une surface réfléchissante 16 prévue dans un second alésage 17. Ceci permet un retour du faisceau sensiblement parallèle à l'axe du corps 1 et de la paroi 3, pour l'amener sur l'ensemble récepteur 15 monté sur le support 18 calé dans le troisième alésage 19. On cherchera, de préférence, à régler l'optique et éventuellement l'émetteur pour qu'au repos (différence de pression nulle, absence de déformation de la paroi 3) le faisceau soit focalisé au centre F de l'ensemble récepteur: une variation de pression différentielle entre les volumes situés de part et d'autre de la paroi déformable 3 se traduit par un déplacement de l'impact optique au-dessus ou au-dessous de F. Si des détecteurs sont disposés de part et d'autre de F à des écartements bien étalonnés on peut mesurer un incrément ou décrément ±Δp bien déterminé. En disposant une série de détecteurs à la surface de l'ensemble 15 et sensiblement dans le plan de la figure, on matérialise une série de points d'impact et on détecte la série de pressions correspondantes.

Dans le cas le plus simple convenant à l'application aux dispositifs décrits dans le brevet français cité plus haut et ses additions, on peut se limiter à deux photodiodes correspondant la première à un +Δp (incrément de pression) et la seconde à un -Δp (décrément de pression) situés de part et d'autre du point F.

On peut résumer l'état logique des photodiodes de la façon suivante:

| première photodiode | 0 | 0 | 1 |
|---|---|---|---|
| seconde photodiode | 1 | 0 | 0 |
| pression différentielle | -Δp | 0 | +Δp |

Les signaux émis par les photodiodes réceptrices permettent un comptage des décréments et des incréments.

Ils peuvent, dans le cas de l'application aux dispositifs antérieurs cités plus haut, servir à commander les ouvertures de valves pour égaliser les pressions et repartir pour une nouvelle détection de ±Δp, le comptage des +Δp et des -Δp prédéterminés permettant de calculer la pression totale.

Il est évident que ce type de dispositif électrooptique, de détection et/ou de mesures de déformations peut s'appliquer à tout type de parois ou membranes déformables, notamment décapteurs de pression et ceci sans sortir du cadre de la présente invention.

REVENDICATIONS

1.- Dispositif électro-optique de détection et de mesure des déformations d'une paroi de capteur de pression disposée entre deux espaces contenant des fluides, les déformations se produisant sous l'action de la pression différentielle entre le fluide, comprenant un dispositif d'émission d'un faisceau lumineux venant se réfléchir sur un point de la paroi, caractérisé par le fait que le faisceau réfléchi est focalisé par une optique réglable en orientation sur un récepteur muni d'au moins un détecteur de positions correspondant à des déformations positives, négatives ou nulles de ladite paroi.

2.- Dispositif selon la revendication 1, caractérisé par le fait que les positions des détecteurs correspondent à des incréments ou décréments prédéterminés de déformation.

3.- Dispositif selon l'une des revendications 1 à 2, caractérisé par le fait que le point d'impact du faisceau correspond sensiblement à un point d'inflexion de la paroi au cours de sa déformation.

4.- Dispositif selon l'une des revendications 2 ou 3, caractérisé par le fait que les détecteurs sont en position correspondant à des incréments ou décréments prédéterminés de pression entre une pression de référence d'un côté de la paroi et une pression à mesurer de l'autre.

5.- Dispositif selon l'une des revendications 1 à 4, caractérisé par le fait que les détecteurs sont des photodiodes.

6.- Dispositif selon l'une des revendications 1 à 5, caractérisé par le fait que l'émetteur de faisceau lumineux est une photodiode.

7.- Dispositif selon l'une des revendications 1 à 6, caractérisé par le fait que le faisceau subit au moins une autre réflexion en plus de celle sur la paroi.

8.- Dispositif selon l'une des revendications 1 à 7, caractérisé par le fait que le faisceau est monochromatique.

9.- Dispositif selon l'une des revendications 1 à 8, caractérisé par le fait que le faisceau est dans la gamme de longueurs d'ondes comprise entre environ 850 et 900 nm.

10.- Dispositif selon l'une des revendications 3 à 9, caractérisé par le fait que lorsque le faisceau partant de la position à déformation nulle atteint une position à incrément ou décrément $\pm \Delta p$ de pression prédéterminé, on égalise la pression de référence à celle de mesurer et on additionne ou on soustrait respectivement une unité de variation de pression correspondant à $\pm\, \Delta p$, ce qui constitue une mesure numérique de pression par comptage d'échelons successifs à incréments ou décréments prédéterminés.

11.- Dispositif selon l'une des revendications 1 à 10, caractérisé par le fait que le récepteur comprend un détecteur correspondant à l'incrément $+\, \Delta p$ et un détecteur correspondant au décrément $-\, \Delta p$.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | EP-A-0 025 564 (SIEMENS AG)<br><br>* Résumé; revendication 1; page 9, alinéa 1; page 10, alinéas 1,2; figures 1,2 *<br><br>--- | 1-6,8, 10,11 | G 01 L 9/00 |
| D,Y | FR-A-2 498 754 (MECILEC S.A.)<br><br>* Revendications 1,2; figure 1 *<br><br>--- | 1,2,4-6,8,10,11 | |
| Y | LASER FOCUS, vol. 19, no. 2, février 1983, page 79, Newton, US<br>"Optical pressure transducer is less sensitive to environs" * En entier *<br><br>--- | 1-6,8, 10,11 | |
| Y | TECHNISCHES MESSEN, vol. 46, no. 6, juin 1979, pages 249-254, Munich, DE<br>W. SCHULZ: "Optoelektronische Messverfahren mit Doppeldioden" * Page 253, colonne de gauche; figure 6 *<br><br>----- | 1-6,8, 10,11 | **DOMAINES TECHNIQUES RECHERCHES (Int. Cl. 3)**<br><br>G 01 L 9<br>G 01 B 11<br>G 01 D 5 |

Le présent rapport de recherche a été établi pour toutes les revendications

| Lieu de la recherche | Date d'achèvement de la recherche | Examinateur |
|---|---|---|
| LA HAYE | 16-05-1984 | VAN ASSCHE P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
----------
& : membre de la même famille, document correspondant

OEB Form 1503. 03.82